# EUROPEAN PATENT APPLICATION

(11) **EP 1 416 713 A1**
(43) Date of publication of application: **06.05.2004**
(21) Application number: 03078265.0
(22) Date of filing: 16.10.2003
(51) Int. Cl.: H04N 1/21, H04N 5/235

(54) **Electronic imaging system with an image sensor reset synchronized to a mechanical shutter**

(30) Priority: 28.10.2002 US 281593
(71) Applicant: EASTMAN KODAK COMPANY, Rochester, New York 14650 (US)
(72) Inventor: Compton, John T. c/o Eastman Kodak Company, Rochester New York 14650-2201 (US)
(74) Representative: Haile, Helen Cynthia

(57) **Abstract**

A camera includes an image sensor having an array of light measuring elements; a shutter curtain which moves in a predetermined direction and with a predetermined speed to block light from reaching the image sensor; and reset mechanism for resetting the light measuring elements to a nominal state; wherein, when the reset mechanism initiates operation at a first time to reset incrementally the elements of the array with substantially the same predetermined direction and with substantially the same predetermined speed as the shutter curtain for starting the light measuring process, the shutter curtain moves at a second time to block light from the image sensor which effectively stops the light measuring process.

## Description

The invention relates generally to the field of image sensors and, more particularly, to such image sensors having reset synchronized with a mechanical shutter for controlling exposure.

In an electronic imaging system that employs a mechanical shutter, such as a digital still camera, exposure times shorter than the shortest exposure time provided by the mechanical shutter can be achieved by using a so-called electronic shutter. For example, in an interline CCD image sensor all of the photodiodes can be reset at one time by applying a large positive potential to the sensor substrate in order to begin an exposure, and then all the photodiodes can be transferred at one time to the light shielded vertical CCDs in order to end the exposure. By using this electronic exposure method, very short exposure times can be achieved. By bracketing this electronic exposure sequence with a mechanical shutter opening prior to the image sensor reset and closing immediately after the image transfer to the vertical CCDs, the image can then be read out of the image sensor in the dark, thereby avoiding undesirable effects from bright light sources leaking into the vertical CCDs during readout. This is referred to in the art as global transfer.

In a CMOS image sensor, a similar electronic exposure mechanism is achieved by resetting all the photodiodes of the image sensor, either globally or quickly row by row, thereby starting the exposure. The exposure is captured during a waiting period and than the collected photoelectrons from the photodiodes are transferred into light shielded floating diffusions, thereby ending the exposure. The resultant signal is then readout for further processing. As with the interline CCD, this electronic exposure can be bracketed by a mechanical exposure so that the image sensor can be read out in the dark. This so-called "global shutter" electronic exposure mechanism requires that there be a floating diffusion for every photodiode, consuming area in each pixel that could otherwise be dedicated to photodiode (the floating diffusion could be shared among several photodiodes if global shutter were not required). Additionally, the floating diffusion may have undesirable characteristics (high dark current, for example), and the image charge must remain in the floating diffusion for a significant amount of time during the readout process, so the image captured in this way may be degraded.

Some CMOS image sensors do not include a floating diffusion for every photodiode, as in the shared floating diffusion mentioned above, and other CMOS image sensors do not use a floating diffusion at all, as in the commonly known three transistor CMOS pixel. These CMOS image sensors do not have the "global shutter" capability. In order to capture a still image with such image sensors, the image sensor is first reset with a mechanical shutter closed to block light from reaching the image sensor, the mechanical shutter is opened to begin the exposure, the mechanical shutter is closed some time later to end the exposure, and the image is readout of the image sensor in the dark. Hence, the shortest exposure time is controlled by the speed of the mechanical shutter. In this situation, it may be desirable to have exposure times shorter than the minimum exposure time provided by the mechanical shutter. Alternatively, it may be desirable to use a lower cost mechanical shutter, but such a shutter will typically be slower and have longer minimum exposure times.

Consequently, a need exists for overcoming the above-described drawbacks. For example, a need exists to achieve short exposure times in a camera with a mechanical focal plane shutter without using electronic global shutter, thereby avoiding the shortcomings of global shutter.

The present invention is directed to overcoming one or more of the problems set forth above. Briefly summarized, according to one aspect of the present invention, the invention resides in a camera comprising: (a) an image sensor having an array of light measuring elements; (b) a shutter which moves in a predetermined direction and with a predetermined speed to block light from reaching the image sensor; and (c) a reset mechanism for resetting the light measuring elements to a nominal state; wherein, when the reset mechanism initiates operation at a first time to reset incrementally the elements of the array with substantially the same predetermined direction and with substantially the same predetermined speed as the curtain for starting the light measuring process, the shutter curtain moves at a second time to block light from the image sensor which effectively stops the light measuring process.

These and other aspects, objects, features and advantages of the present invention will be more clearly understood and appreciated from a review of the following detailed description of the preferred embodiments and appended claims, and by reference to the accompanying drawings.

The present invention has the following advantages of having short exposure times in a camera with a mechanical focal plane shutter without using electronic global shutter, thereby avoiding the shortcomings of global shutter such as floating diffusion dark current, non correlated double sampling, non-linearities of photoresponse, and the need to have a floating diffusion for every pixel. Additionally, in an alternative embodiment of the present invention, one could enable mode switching from live preview / through-the-lens exposure predetermination and focusing to final image capture without requiring a shutter closure between the live preview operation and the capture operation and without requiring global shutter capture.
Fig. 1 is a schematic diagram of a single pixel of the present invention;
Fig. 2 is a schematic diagram of a portion of pixels in the sensor of the present invention for illustrating common connection among the pixels;
Fig. 3 is a block diagram of the camera of the present invention using the pixels of Fig. 2;
Fig. 4 is perspective drawing of the optical path for the camera of Fig. 3;
Figs. 5a-5d are illustrations of the sequence of operation of synchronization of the reset and mechanical shutter of the present invention; and
Fig. 6 is an illustration of the camera of the present invention.

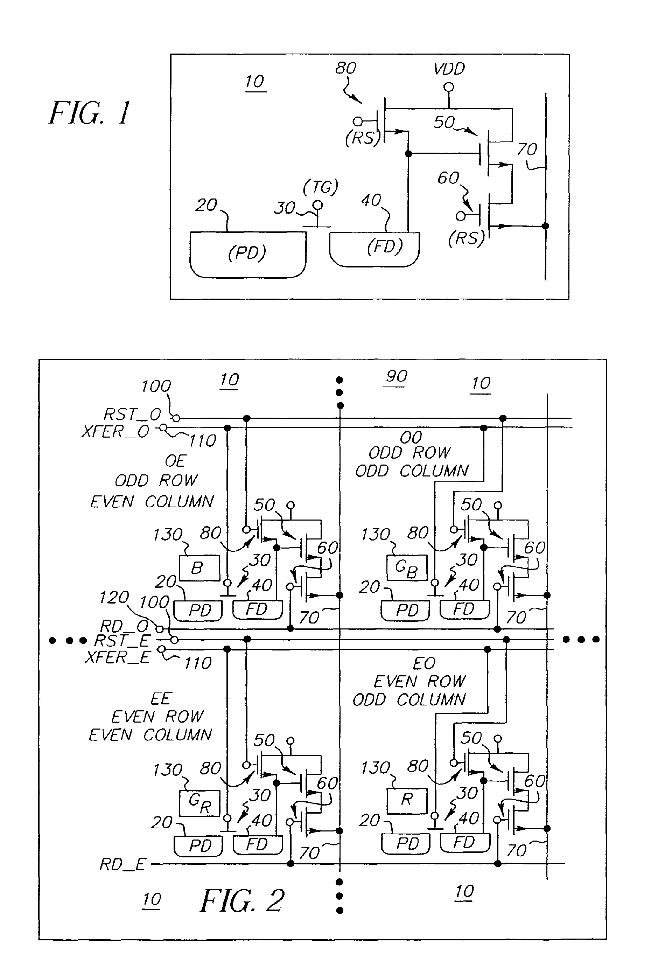

Referring to Fig. 1, there is shown a representative pixel 10 for an image sensor of the present invention. A photodiode 20 receives incident light and converts it to a charge. A transfer gate 30 is electrically connected to both the photodiode 20 and a floating diffusion 40, and the transfer gate 30 is activated for transferring the charge from the photodiode 20 to the floating diffusion 40. The charge is then passed to an output transistor 50 which is biased by voltage VDD, and as a result, the charge is converted to a voltage or signal, and this signal is passed to row select transistor 60. The row select transistor 60 is selectively activated for passing the signal to a common column line or bus 70 that passes the signal out of the pixel for further processing. To reset the photodiode 20, a reset gate 80 is activated for setting the floating diffusion 40 to a reference voltage, and the transfer gate 30 is activated substantially simultaneously for resetting the photodiode 20 to this reference voltage via the floating diffusion 40.

Referring to Fig. 2, there is shown a plurality of the pixels 10 of the present invention, which form a portion of the image sensor for further illustrating the reset operation. The image sensor 90 includes a reset line 100 for activating the reset gate 80 for each row of pixels and a transfer line 110 for activating the transfer gate 30 also for each row of pixels. As may be readily apparent, the reset line 100 and transfer line 110 are electrically connected to all the pixels 10 in a particular row. Although only two pixels 10 are shown for purposes of illustration, the image sensor 90 includes millions of such pixels in a typical image sensor. Any particular row of pixels 10 is reset by activating its particular reset line 100, and consequently the reset gate 80, and by activating its particular transfer line 110, and consequently the transfer gate 30, for resetting the floating diffusion 40 and the photodiode 20 to the reference voltage (VDD), as discussed hereinabove. It is instructive to note that this resets all the pixels 10 on this particular row. After resetting the first row of pixels 10, this process is sequentially repeated for resetting all the rows of pixels 10. For thoroughness of understanding, readout occurs after all the pixels 10 have been reset by activating the row select line 120 for a particular row, and consequently the row select transistors 60 for that particular row. All the rows of pixels 10 contain the reset line 100, transfer line 110 and row select line 120, although some are not shown. A plurality of different color filters 130 are positioned covering the photodiodes for producing color in the photodiode as is well know in the art.

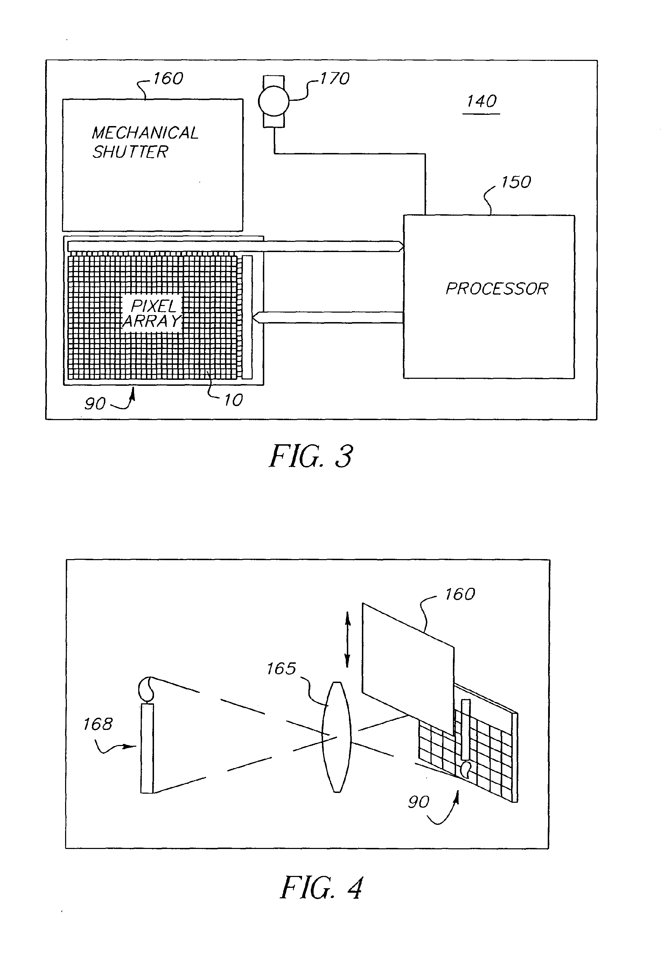

Referring to Fig. 3, there is shown a portion of the components of the camera 140 of the present invention. The camera 140 includes a processor 150 for directing operation of a mechanical shutter 160 and the above-described reset operation. More specifically, the processor 150 initiates reset at a first time (t₀) and subsequently initiates the movement of the shutter down the rows of pixels 10 via a mechanical shutter actuator 170 at a second time (t₁) for forming the exposure time for the pixels.

Referring to Fig. 4, there is shown a perspective view of an optical arrangement of the camera 140 for illustrating the operation of the mechanical shutter 160 substantially in the focal plane of the image sensor 90. In this regard, incoming light is directed by a lens 165 onto the image sensor 90 for focusing an object 168 onto the image sensor 90. A mechanical shutter 160 is used for preventing or permitting the incoming light to be received by the image sensor 90. For clarity of understanding, Fig. 4 shows the mechanical shutter 160 partially closed, and it is to be noted that, for initially exposing all of the pixels, the shutter will be positioned in the same plane, but upwardly and out of the focal path. It is to be further noted that the mechanical shutter 160 can be moved upwardly and downwardly in this plane as needed by the processor 150.

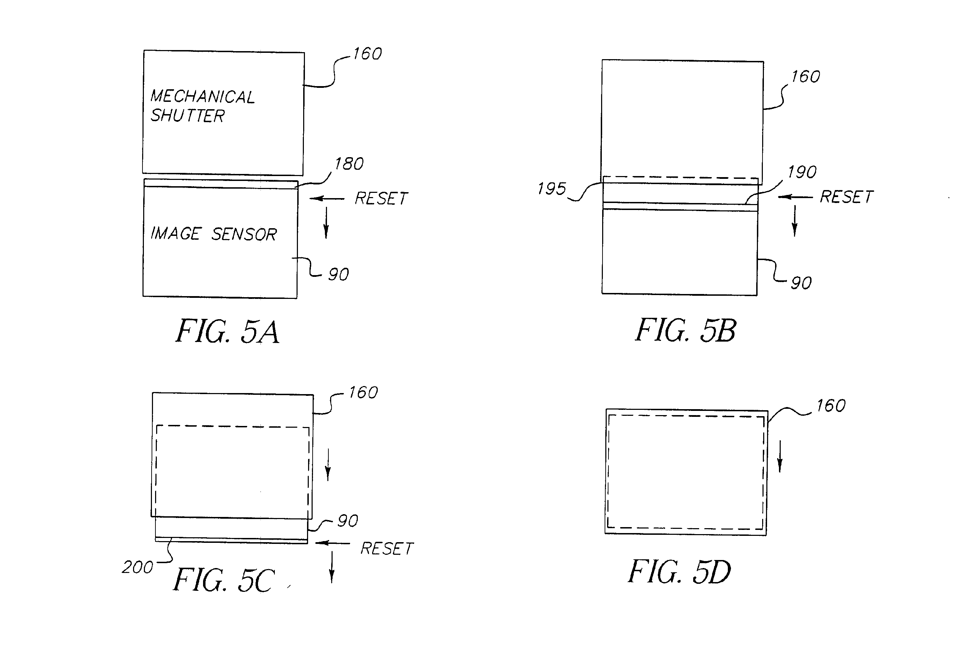

Referring to Figs. 5a-5d, there is shown the synchronization of the mechanical shutter 160 with the reset operation. Fig. 5a illustrates the initial position of the mechanical shutter 160 before image capture. To start image capture, the first row of pixels 180 is reset at time t₀ and the other rows are reset sequentially after this. For example and referring to Fig. 5b, at time t₁, the mechanical shutter 160 moves into the optical path of the first row of pixels 180 of the image sensor 90 which effectively stops the light measuring process by the pixels 180. This synchronization forms an exposure window between the leading edge 195 of the mechanical shutter 160 and the last row pixels (for example row of pixels 190) that are reset for permitting each row of pixels in this window to be exposed to the light measuring process by resetting each row of pixels in a predetermined spatial relationship with the mechanical shutter for effectively creating an exposure time for the pixels. It is to be noted that the exposure time is t₁ minus t₀.

Referring to Fig. 5c, at a subsequent time after t₀, for example time t₂, the reset operation reaches the last row of pixels 200 and the shutter 160 is approaching the last row of pixels 200 in the predetermined spatial relationship. Referring to Fig. 5d, the mechanical shutter 160 is shown covering all the rows of pixels for illustrating that the exposure for all the pixels is complete.

The synchronization of the reset process to the mechanical shutter movement can be accomplished in a variety of ways. For example, a trigger pin on the image sensor could be operated to reset the first row of the pixel array, and a programmable delay in the image sensor could control the row to row reset time to cause the progress of the reset process to match the sweep of the mechanical shutter through the image plane. Additionally, a programmable delay could be initiated by the trigger pin, at the end of which delay the mechanical shutter could be actuated. In another embodiment, a pin on the image sensor could be operated in order to advance to the next row and reset it; it would be up to some external agent to signal this pin at the appropriate times to match the row reset process to the mechanical shutter movement.

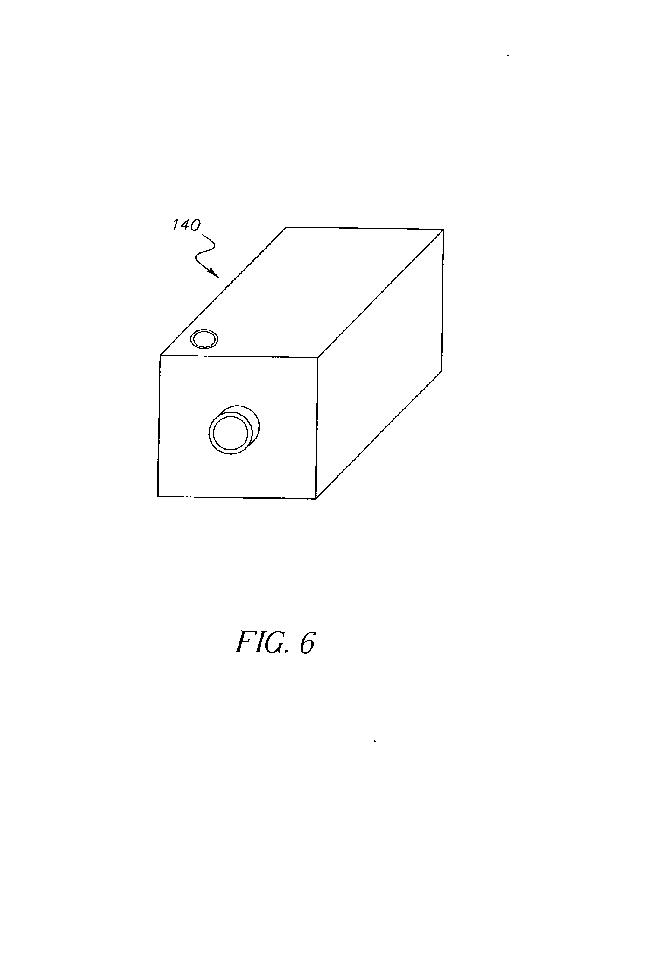

Referring to Fig. 6, there is shown the digital camera 140 of the present invention for clearly illustrating a preferred embodiment of the present invention.

## Claims

1. A camera comprising:
(a) an image sensor having an array of light measuring elements;
(b) a shutter curtain which moves in a predetermined direction and with a predetermined speed to block light from reaching the image sensor; and
(c) a reset mechanism for resetting the light measuring elements to a nominal state; wherein, when the reset mechanism initiates operation at a first time to reset incrementally the elements of the array with substantially the same predetermined direction and with substantially the same predetermined speed as the shutter curtain for starting the light measuring process, the shutter curtain moves at a second time to block light from the image sensor which effectively stops the light measuring process.

2. The camera as in claim 1 wherein the incremental operation of the reset mechanism is controlled by a timer that provides a time delay between each increment of operation of the reset mechanism.

3. The camera as in claim 1 wherein operation of the shutter curtain is controlled by a timer that provides a time delay between beginning of the operation of the reset mechanism and beginning of motion of the curtain.

4. The camera as in claim 1 wherein the incremental operation of the reset mechanism is controlled by an externally generated signal wherein each operation of the signal causes an increment of operation of the reset mechanism.

5. A camera comprising:
(a) an image sensor having a plurality of light-measuring elements arranged in an array, each light-measuring having a reset mechanism for resetting an output structure to a reference voltage;
(b) a plurality of reset lines electrically attached to at least a portion of the reset mechanisms; and
(c) a focal plane shutter having a leading plane and a trailing plane both of which move in a spaced-apart relationship along the array of light-measuring elements for forming an exposure window; wherein, when the exposure window moves along the array of light-measuring elements, the reset lines are operated in synchronism with the exposure window for resetting each reset mechanism in a predetermined spatial relationship with the exposure window for creating an exposure time for the light-measuring elements.

6. The camera as in claim 5, wherein the plurality of reset mechanisms are programmed so that the reset mechanisms for a row or column are operated in time delay to the reset mechanisms for the previously operated reset row or column.
